Europäisches Patentamt

European Patent Office

Office européen des brevets

(19)

(11) **EP 0 564 361 B1**

(12) **FASCICULE DE BREVET EUROPEEN**

(45) Date de publication et mention
de la délivrance du brevet:
**04.03.1998 Bulletin 1998/10**

(51) Int Cl.6: **H04L 27/22**

(21) Numéro de dépôt: **93400848.3**

(22) Date de dépôt: **01.04.1993**

(54) **Dispositif de démodulation de signaux pi/4 - QPSK**

Einrichtung zur Demodulation von pi/4-QPSK-Signalen

Demodulation apparatus for pi/4-QPSK signals

(84) Etats contractants désignés:
**CH DE ES FR GB IT LI NL SE**

(30) Priorité: **03.04.1992 FR 9204101**

(43) Date de publication de la demande:
**06.10.1993 Bulletin 1993/40**

(73) Titulaire: **ALCATEL ALSTHOM COMPAGNIE
GENERALE D'ELECTRICITE
75008 Paris (FR)**

(72) Inventeur: **Podolak, Thierry
F-92300 Levallois-Perret (FR)**

(74) Mandataire:
**Pothet, Jean Rémy Emile Ludovic et al
ALCATEL ALSTHOM,
Département de Propriété Industrielle,
30, avenue Kléber
75116 Paris (FR)**

(56) Documents cités:
**EP-A- 0 350 999          GB-A- 2 240 674
US-A- 3 983 499**

- **40th IEEE Vehicular Technology Conference, 6 - 9 Mai, 1990, Orlando, US; IEEE, New York, US, 1990; pages 687 - 694, Goode, et al.: "A comparison of limiter discriminator, delay and coherent detection of pi/4 QPSK"**

## Description

Le domaine de l'invention est celui de la démodulation de signaux numériques codés à l'aide d'une modulation mettant en oeuvre deux constellations de modulation décalées et sélectionnées alternativement, conformément à la modulation π/4-QPSK (en anglosaxon: π/4 shifted Quaternary Phase Shift Keying (modulation de phase à quatre états et à constellations décalées de π/4)).

Cette modulation π/4-QPSK est une modulation qui est maintenant largement utilisée dans le domaine du radiotéléphone. Elle a, en particulier, été choisie pour les standards nord-américain et japonais de radiotéléphonie cellulaire numérique ainsi que pour le nouveau standard européen TSTS de radiotéléphonie numérique pour les avions de ligne.

Le principe général de cette modulation correspond à une modulation classique à quatre états de phase (QPSK), dont la constellation de modulation serait une fois sur deux décalée d'un angle de π/4. Les transitions entre symboles sont telles que la modulation d'amplitude est plus limitée qu'en modulation QPSK classique.

Une méthode classique de démodulation d'un tel signal est de considérer qu'il est modulé selon une modulation à huit états de phase. On utilise alors par exemple un démodulateur à boucle de Costas 8PSK. De tels modulateurs sont beaucoup plus complexes que les démodulateurs QPSK, et donc d'un coût de revient supérieur.

Des techniques de démodulation spécifiques au π/4-QPSK ont également été développées, telles que celles présentées notamment dans la demande de brevet britannique GB-A-2.240.674, déposée le 23 janvier 1991.

Plus précisément, ce document décrit trois types de démodulateurs, dont l'objectif commun est de faire "basculer" de π/4 la constellation du signal reçu un symbole sur deux, après démodulation.

En d'autres termes, ces démodulateurs comprennent une boucle de Costas classique pour la démodulation de signaux QPSK, assurant l'asservissement d'un oscillateur contrôlé en tension, qui pilote deux multiplieurs délivrant deux signaux démodulés en phase et en quadrature. Le basculement alternatif de π/4 est effectué sur ces signaux démodulés, à l'aide d'un module spécifique de basculement (fig.4 du document GB 2.240.674), d'une table de transcodage (fig.9) ou d'un oscillateur contrôlé en tension fonctionnant à une fréquence quatre fois supérieure à celle de la boucle de Costas (fig.11).

Ces trois techniques présentent notamment l'inconvénient de nécessiter l'ajout aux systèmes connus à boucle de Costas d'un ou plusieurs éléments complexes, donc coûteux (circuit de décalage de phase, mémoire morte ou boucle à verrouillage de phase,...).

L'invention a notamment pour objectif de pallier ces différents inconvénients de l'état de la technique.

Plus précisément, un objectif de l'invention est de fournir un dispositif de démodulation de signaux modulés selon une technique à constellations de modulation décalées alternativement de type π/4-QPSK qui soit simple et peu coûteux, par rapport aux démodulateurs existants pour des modulations à même nombre d'états de phase, mais sans décalage de constellation, et ne nécessite pas l'ajout de composants complexes aux dispositifs à boucle de Costas connus.

Un autre objectif de l'invention est de fournir un tel dispositif de démodulation présentant une robustesse identique à celle des dispositifs classiques à boucle de Costas.

Ces objectifs, ainsi que d'autres qui apparaîtront par la suite, sont atteints grâce à un dispositif de démodulation d'un signal reçu ayant une fréquence porteuse, modulé sur deux axes en quadrature selon une technique de modulation numérique de type π/4-QPSK mettant en oeuvre deux constellations de modulation à quatre états de phase décalées, sélectionnées alternativement, du type comprenant:

- un oscillateur commandé en tension fournissant un signal local ayant cette fréquence porteuse,
- des moyens de démodulation utilisant le signal local et fournissant, après filtrage, les composantes en phase P et en quadrature Q du signal reçu démodulé,
- des moyens d'asservissement de phase produisant un signal de commande destiné à la commande de l'oscillateur et incluant un estimateur de phase produisant un signal d'estimation de phase E, vérifiant sensiblement la propriété:

$$E\,(\phi + \pi/4) = -E\,(\phi) \qquad (1)$$

avec :

$$\cos\,\phi = \frac{P}{\sqrt{P^2+Q^2}} \text{ et } \sin\,\phi = \frac{Q}{\sqrt{P^2+Q^2}}$$

et intervenant dans la commande de l'oscillateur, le signal d'estimation de phase étant obtenu à partir des composantes en phase P et en quadrature Q du signal reçu démodulé.

Selon l'invention, les moyens d'asservissement de phase comprennent des moyens d'inversion alternative de la polarité du signal d'estimation de phase E, au rythme de l'alternance des constellations, fournissant le signal de commande destiné à la commande de l'oscillateur.

Avantageusement, les moyens d'inversion alternative de la polarité du signal d'estimation de phase E, au rythme de l'alternance des constellations, sont pilotés par un signal d'inversion de polarité I de signe alternativement positif et négatif, chaque transition du signal d'inversion correspondant sensiblement à une transition entre deux symboles successifs du signal numérique.

Le signal d'inversion de polarité I peut être obtenu simplement par division par deux de la fréquence d'un signal d'horloge ayant la fréquence symbole du signal numérique.

Avantageusement, les moyens d'inversion alternative de la polarité du signal d'estimation de phase sont constitués par un multiplieur recevant d'une part le signal d'inversion de polarité et d'autre part le signal d'estimation de phase E.

L'invention s'applique en particulier lorsque l'estimateur de phase fournit un signal d'estimation de phase E selon l'une des expressions :

$$E = (P).(Q).(P+Q).(P-Q) \qquad (2)$$

$$E = sgn(P).sgn(Q).sgn(P+Q).sgn(P-Q) \qquad (3)$$

où sgn(.) étant un opérateur fournissant le signe du signal (.) considéré.

D'autres estimateurs similaires ou équivalents vérifiant la propriété (1) peuvent bien sûr être également utilisés.

D'autres caractéristiques et avantages de l'invention apparaîtront à la lecture de la description suivante d'un mode de réalisation préférentiel, donné à titre indicatif et non limitatif, et des dessins annexés dans lesquels:

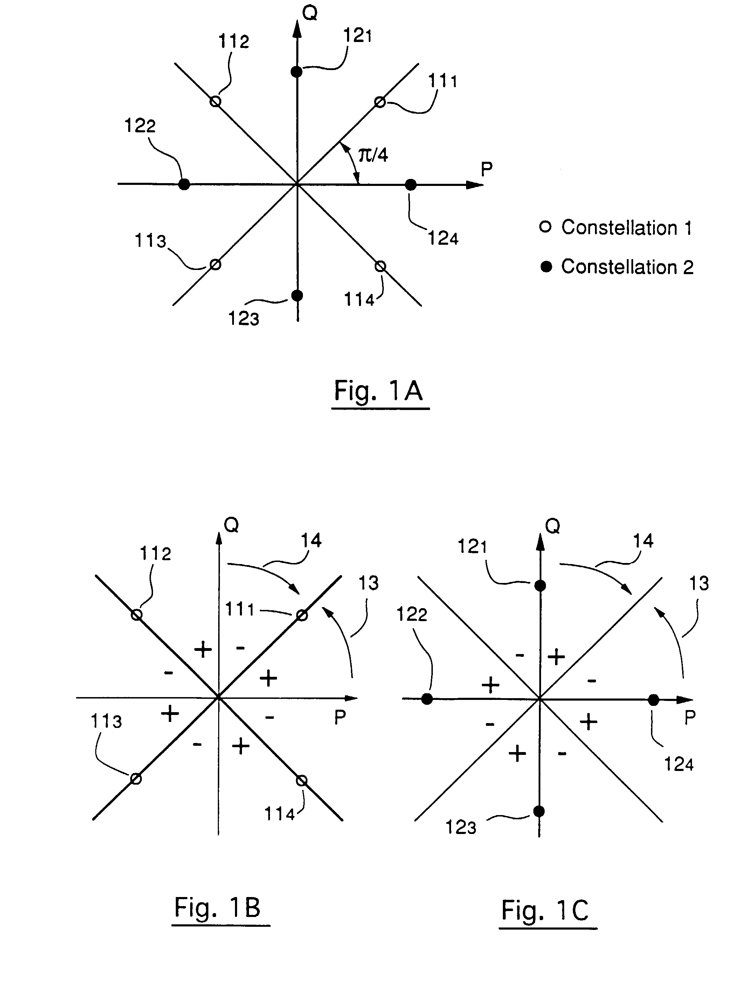

- les figures 1A, 1B et 1C illustrent le principe de la modulation π/4-QPSK;

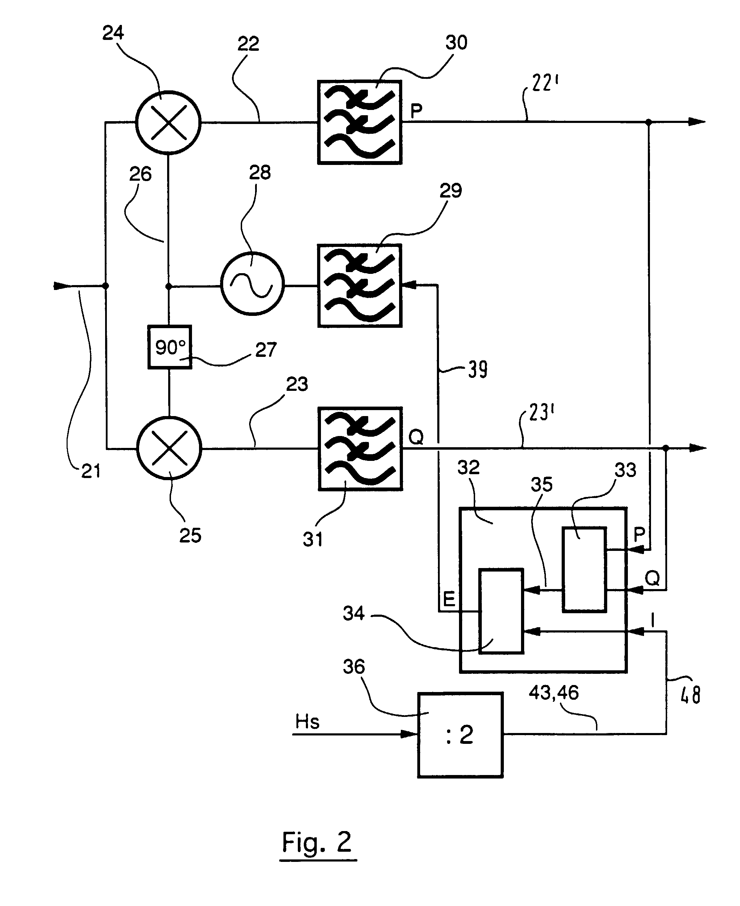

- la figure 2 est un schéma synoptique d'un dispositif de démodulation selon l'invention;

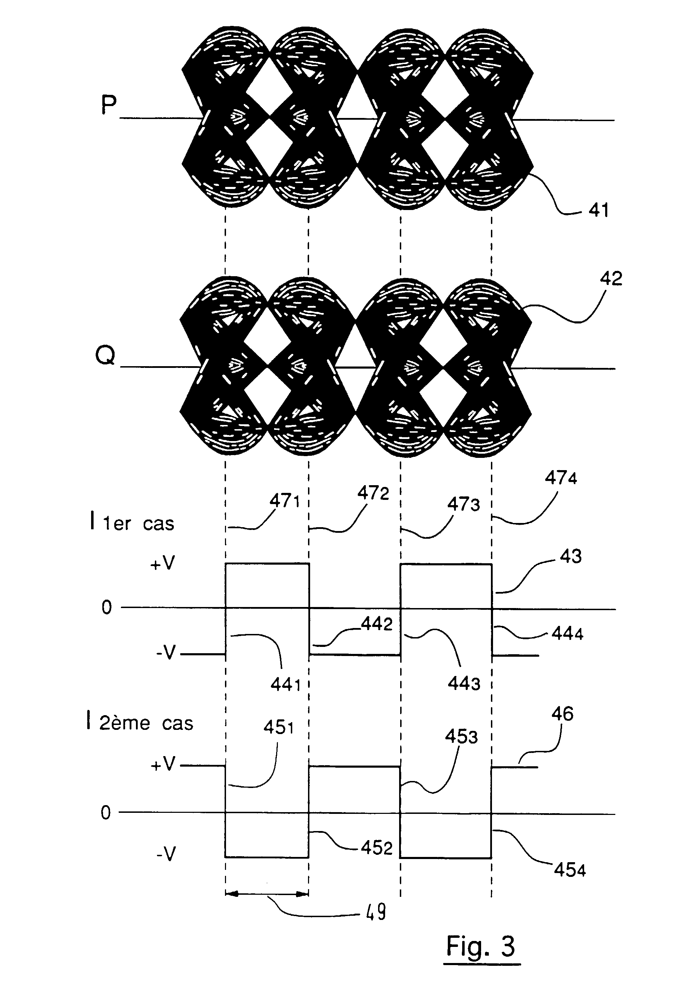

- la figure 3 présente un diagramme de l'oeil des signaux reçus dans une modulation telle qu'illustrée en figures 1A à 1C, et deux signaux d'inversion de polarité correspondant.

La figure 1A représente l'ensemble des états constituant la constellation de la modulation π/4-QPSK, dans le plan défini par les axes P (composante en phase) et Q (composante en quadrature).

Au cours du temps, le signal peut donc prendre huit états distincts $11_1$ à $11_4$ et $12_1$ à $12_4$, tous séparés d'un angle de π/4.

Cette constellation correspond à celle utilisée en modulation classique 8-PSK. Il est donc clair que la modulation π/4-QPSK peut être démodulée à l'aide d'un démodulateur 8-PSK. Toutefois, un tel démodulateur est sous-utilisé. Il doit présenter une capacité de discrimination de π/4 (angle entre deux états possibles consécutifs), alors qu'une discrimination de π/2 est suffisante en π/4-QPSK. Il s'en suit clairement que l'utilisation d'un démodulateur 8-PSK pour la modulation π/4QPSK entraîne une complexité inutile.

En effet, en modulation π/4-QPSK, le signal ne peut prendre que quatre états de phase distincts à un instant donné, tous distants de π/2. Par exemple, à l'instant t correspond la constellation 1, comprenant les états $11_1$ à $11_4$. A l'instant correspondant au symbole suivant, le signal peut prendre l'un des quatre états $12_1$ à $12_4$ d'une constellation 2 décalée de π/4 par rapport à la constellation 1.

Ce décalage alternatif présente de nombreux avantages, notamment en ce qui concerne les transitions entre deux états consécutifs.

Les figures 1B et 1C présentent respectivement le cas de la constellation 1 active, puis de la constellation 2 active. Il apparaît clairement, sur ces figures, que ces constellations correspondent, à un instant donné, à une constellation classique QPSK.

L'invention vise donc à permettre la démodulation des signaux π/4-QPSK à l'aide de moyens de démodulation connus pour la démodulation QPSK, et notamment la boucle de Costas. Plus précisément, l'invention apporte à cette boucle de Costas QPSK une amélioration simple et peu onéreuse, qui permet de l'adapter à la démodulation π/4-QPSK, sans en modifier la robustesse.

De façon classique, une boucle de Costas comprend un oscillateur commandé en tension produisant un signal local d'une fréquence sensiblement égale à la fréquence porteuse du signal reçu, afin d'en permettre une démodulation de phase, cet oscillateur local étant piloté par un signal de commande dérivé d'un estimateur de phase.

Cet estimateur de phase délivre une information tendant à ramener le signal démodulé vers l'une des phases d'équilibre stables de la constellation. Ainsi, si l'on considère le cas de la figure 1B, l'estimateur de phase fournit un signal dont le signe, illustré par les signes "+" et "-", dépend de la position du symbole démodulé, et a pour effet de faire tourner la constellation du signal démodulé, respectivement dans les sens de rotation 13 et 14, par action sur la phase de l'oscillateur commandé en tension.

De cette façon, le signal démodulé est toujours ramené à la phase d'équilibre stable la plus proche.

De façon générale pour la boucle de Costas, cet estimateur de phase peut mettre en oeuvre plusieurs calculs connus, tels que, par exemple :

$$E = P.Q.(P+Q).(P-Q)$$

$$E = sgn(P).sgn(Q).sgn(P+Q).sgn(P-Q)$$

$$E = P.sgn(Q) - Q.sgn(P)$$

où : sgn ( ) est la fonction délivrant le signe du signal considéré.

Il est clair qu'un tel estimateur ne peut pas être mis directement en oeuvre pour la modulation π/4-QPSK. En effet, si l'on observe conjointement les figures 1B et 1C, on constate que les phases d'équilibre stables étant alternativement décalées ($11_1$ à $11_4$, fig. 1B, puis $12_1$ à $12_4$, fig.1C), les signes de l'estimateur doivent varier en conséquence.

L'invention apporte à ce problème une solution particulièrement simple, fondée sur l'observation que, d'une constellation (fig.1B) à l'autre (fig.1C), les signes des signaux d'estimation de phase sont opposés.

Selon l'invention, on modifie donc le signal d'estimation de phase utilisé classiquement, en prévoyant des moyens d'inversion régulière, au rythme d'un symbole reçu sur deux, du signal délivré par l'estimateur. De cette façon, le signal de commande de l'oscillateur correspondra toujours au signal d'estimation de phase relatif à la constellation active.

La figure 2 présente le schéma synoptique d'un démodulateur selon l'invention.

Le signal modulé reçu 21 est simultanément démodulé en phase 22 et en quadrature 23 à l'aide de deux multiplieurs 24 et 25, assurant le produit du signal reçu 21 avec un signal local 26 à la fréquence porteuse, déphasé de 90° par un déphaseur 27 pour la voie en quadrature 23.

Ce signal local à la fréquence porteuse 26 est délivré par un oscillateur 28 commandé en tension par un signal de commande 39 après filtrage de boucle passebas 29.

De même les signaux démodulés 22 et 23 sont filtrés respectivement par des filtres passe-bas 30 et 31, délivrant les signaux en phase P et en quadrature Q 22' et 23'.

L'invention repose sur les moyens d'asservissement de phase 32 contenant l'estimateur de phase 33. Ces moyens d'asservissement de phase 32 prennent en compte non seulement les signaux démodulés 22' et 23', mais également un signal d'inversion de polarité I 48, qui permet de suivre le décalage des constellations de modulation.

Ce signal I 48 est de signe alternativement positif puis négatif, au rythme Hs de l'arrivée des symboles, et sensiblement constant pendant la durée de chacun de ces symboles.

Plus précisément, les moyens 32 d'asservissement de phase selon l'invention peuvent être considérés comme la combinaison d'un estimateur 33 classique, délivrant un signal d'estimation 35, couplé à des moyens 34 d'inversion alternative de ce signal d'estimation 35, piloté par le signal 48.

Dans la pratique, l'estimateur 33 délivre par exemple le signal d'estimation de phase E(35) suivant:

$$E = (P).(Q).(P+Q).(P-Q).$$

Dans un autre mode de réalisation, cet estimateur 33 peut calculer le signal d'estimation de phase E(35) selon:

$$E = sgn(P).sgn(Q).sgn(P+Q).sgn(P-Q)$$

Plus généralement, de nombreux estimateurs de phase connus peuvent être utilisés, des moyens d'inversion au rythme des symboles du signal d'estimation de phase E(35) étant ajoutés.

Il est à noter toutefois qu'il est essentiel que l'estimateur considéré délivre un signal continu et sensiblement symétrique, c'est-à-dire vérifiant la propriété (1). Ainsi, l'estimateur connu: $E = P.sgn(Q) - Q.sgn(P)$, bien que particulièrement simple, n'est pas compatible avec l'invention car il ne vérifie pas la propriété (1).

Le signal d'inversion de polarité 48 peut être produit de différentes manières, et par exemple à partir d'une horloge interne au démodulateur.

Toutefois, il est particulièrement avantageux, tant du point de vue de la fiabilité de l'estimation que de la simplicité matérielle, de déterminer ce signal 48 à partir de l'horloge symbolique Hs. Il suffit en effet d'un simple diviseur de fréquence par 2, référencé 36, pour obtenir le signal 48 à partir de Hs.

Cette horloge symbolique est toujours disponible dans les récepteurs. Elle peut par exemple être fournie par le système de récupération de rythme, ce qui ne pose pas de problème puisque le rythme est récupéré avant la porteuse.

Les moyens 34 d'inversion de polarité peuvent être constitués par un simple multiplieur, analogique ou numérique, multipliant le signal d'estimation de phase E (35) par le signal 48.

La figure 3 illustre un tel signal modulé et deux signaux d'inversion correspondants. Plus précisément, les courbes 41 et 42 présentent deux diagrammes de l'oeil correspondant respectivement aux signaux modulés 22' et 23'. Les courbes 43 et 46 sont deux signaux d'inversion de polarité 48 possibles.

On peut constater que les fronts de montée $44_1$, $44_3$, et respectivement $45_2$, $45_4$ et les fronts de descente $44_2$, $44_4$, $45_1$, $45_3$ se trouvent exactement positionnés aux transitions $47_1$ à $47_4$ entre deux symboles successifs.

Ainsi, lorsque l'oeil des signaux 41 et 42 est ouvert, et pendant une durée 49 égale à la durée d'un symbole, le signal 48 reste constant.

Il est à noter que les signaux d'inversion 43 et 46 sont équivalents, du point de vue de l'estimateur. On peut utiliser l'un ou l'autre comme signal 48. Il ne pose donc aucun problème à l'initialisation de la démodulation. Dans l'un des cas, la constellation du signal démodulé tournera de π/4 avant d'atteindre une position d'équilibre. Par ailleurs, toute ambiguïté de phase multiple de π/4, par rapport au signal émis est sans conséquence du fait du codage différentiel de la constellation à l'émission.

Le dispositif décrit ci-dessus présente l'avantage de conserver les mêmes propriétés de robustesse que les dispositifs classiques à boucle de Costas. Ainsi, il est notamment possible de l'appliquer à toute classe de débit numérique.

Par ailleurs, son implémentation particulièrement simple en fait une solution attractive.

## Revendications

1. Dispositif de démodulation d'un signal reçu (21; 41, 42) ayant une fréquence porteuse, modulé sur deux axes en quadrature selon une technique de modulation numérique de type $\pi/4$-QPSK mettant en oeuvre deux constellations de modulation à quatre états de phase décalées, sélectionnées alternativement, du type comprenant:

   - un oscillateur commandé en tension (28) fournissant un signal local ayant sensiblement ladite fréquence porteuse,
   - des moyens de démodulation utilisant ledit signal local et fournissant, après filtrage (30, 31), les composantes en phase P (22') et en quadrature Q (23') du signal reçu démodulé,
   - des moyens d'asservissement de phase (32) produisant un signal de commande (39) destiné à la commande dudit oscillateur (28) et incluant un estimateur de phase (33) produisant un signal d'estimation de phase E (35), vérifiant sensiblement la propriété:

$$E\ (\phi + \pi/4) = -E\ (\phi)$$

   avec :

$$\cos\ \phi = \frac{P}{\sqrt{P^2+Q^2}} \ et\ \sin\ \phi = \frac{Q}{\sqrt{P^2+Q^2}}$$

   et intervenant dans la commande de l'oscillateur (28), ledit signal d'estimation de phase E (35) étant obtenu à partir desdites composantes en phase P (22') et en quadrature Q (23') du signal reçu démodulé,
   caractérisé en ce que lesdits moyens d'asservissement de phase (32) comprennent des moyens (34) d'inversion alternative de la polarité dudit signal d'estimation de phase E (35), au rythme de l'alternance desdites constellations, fournissant ledit signal de commande (39) destiné à la commande dudit oscillateur (28) après filtrage (29) dans la boucle.

2. Dispositif selon la revendication 1, caractérisé en ce que lesdits moyens (34) d'inversion alternative de la polarité dudit signal d'estimation de phase E (35), au rythme de l'alternance desdites constellations, sont pilotés par un signal d'inversion de polarité I (48) de signe alternativement positif et négatif, chaque transition ($44_1$ à $44_4$, $45_1$ à $45_4$) dudit signal (43, 46; 48) d'inversion correspondant sensiblement à une transition ($47_1$ à $47_4$) entre deux symboles successifs dudit signal numérique (41, 42).

3. Dispositif selon la revendication 2, caractérisé en ce que ledit signal d'inversion de polarité I (48) est obtenu par division par deux (33) de la fréquence d'un signal d'horloge (Hs) ayant la fréquence symbole dudit signal numérique.

4. Dispositif selon l'une des revendications 1 à 3, caractérisé en ce que lesdits moyens (34) d'inversion alternative de la polarité du signal d'estimation de phase E (35) sont constitués par un multiplieur recevant d'une part ledit signal d'inversion de polarité I (48) et d'autre part ledit signal d'estimation de phase E (35).

5. Dispositif selon l'une des revendications 1 à 4, caractérisé en ce que ledit estimateur de phase (33) fournit un signal d'estimation de phase E (35) selon l'expression:

$$E = (P).(Q).(P+Q).(P-Q).$$

6. Dispositif selon l'une des revendications 1 à 4, caractérisé en ce que ledit estimateur de phase (33) fournit un signal d'estimation de phase E (35) selon l'expression:

$$E = sgn(P).sgn(Q).sgn(P+Q).sgn(P-Q)$$

   sgn(.) étant un opérateur fournissant le signe du signal (.) considéré.

## Patentansprüche

1. Vorrichtung zum Demodulieren eines empfangenen Signals (21; 41, 42), das eine Trägerfrequenz hat und auf zwei Achsen quadraturmoduliert ist gemäß einer digitalen Modulationstechnik vom Typ $\pi/$4-QPSK, die zwei Modulationskonstellationen mit vier verschobenen Phasenzuständen verwendet, die abwechselnd ausgewählt werden, vom Typ mit:

   - einem spannungsgesteuerten Oszillator (28), der ein lokales Signal liefert, das im wesentlichen die Trägerfrequenz hat,

- Demodulationsmitteln, die das lokale Signal verwenden und nach Filterung (30, 31) die Phasenkomponente (22') und Quadraturkomponente (23') des demodulierten empfangenen Signals liefern,

- Phasensteuerungsmitteln (32), die ein zur Steuerung des Oszillators (28) vorgesehenes Steuerungssignal (39) liefern und einen Phasenabschätzer (33) enthalten, der ein Phasenabschätzungssignal E (35) liefert, das im wesentlichen die Eigenschaft

$$E \left( \varphi + \pi/4 \right) = -E \left( \varphi \right)$$

mit :

$$\cos \varphi = \frac{P}{\sqrt{P^2 + Q^2}} \quad \text{und} \quad \sin \varphi = \frac{Q}{\sqrt{P^2 + Q^2}}$$

erfüllt und an der Steuerung des Oszillators (28) mitwirkt, wobei das Phasenabschätzungssignal E (35) aus der Phasenkomponente P (22') und der Quadraturkomponente Q (23') des demodulierten empfangenen Signals erhalten ist,

dadurch gekennzeichnet, daß die Phasensteuerungsmittel (32) Mittel (34) zum abwechselnden Umkehren der Polarität des Phasenabschätzungssignals E (35) im Rhythmus des Wechsels der Konstellationen umfassen, die das Steuersignal (39) liefern, das zum Steuern des Oszillators (28) nach Filterung (29) in der Schleife vorgesehen ist.

2. Vorrichtung nach Anspruch 1, dadurch gekennzeichnet, daß die Mittel (34) zum abwechselnden Umkehren der Polarität des Phasenabschätzungssignals E (35) im Rhythmus des Wechsels der Konstellationen durch ein Polaritätsumkehrsignal I (48) mit abwechselnd positivem und negativem Vorzeichen gesteuert sind, wobei jeder Übergang ($44_1$ bis $44_4$, $45_1$ bis $45_4$) des Umkehrsignals (43, 46; 48) im wesentlichen einem Übergang ($47_1$ bis $47_4$) zwischen zwei aufeinanderfolgenden Symbolen des digitalen Signals (41, 42) entspricht.

3. Vorrichtung nach Anspruch 2, dadurch gekennzeichnet, daß das Polaritätsumkehrsignal I (48) erhalten ist durch Teilen durch zwei (33) der Frequenz eines Taktsignals (Hs), das die Symbolfrequenz des digitalen Signals hat.

4. Vorrichtung nach einer der Ansprüche 1 bis 3, dadurch gekennzeichnet, daß die Mittel zum abwechselnden Umkehren der Polarität des Phasenabschätzungssignals E (35) durch einen Multiplizierer gebildet sind, der einerseits das Polaritätsumkehrsignal I (48) und andererseits das Phasenabschätzsignal E (35) empfängt.

5. Vorrichtung nach einem der Ansprüche 1 bis 4, dadurch gekennzeichnet, daß der Phasenabschätzer (33) ein Phasenabschätzungssignal E (35) gemäß dem Ausdruck:

$$E = (P) . (Q) . (P+Q) . (P-Q)$$

liefert.

6. Vorrichtung nach einem der Ansprüche 1 bis 4, dadurch gekennzeichnet, daß der Phasenabschätzer (33) ein Phasenabschätzungssignal E (35) gemäß dem Ausdruck:

$$E = sgn(P).sgn(Q).sgn(P+Q).sgn(P-Q)$$

liefert, wobei sgn (.) ein Operator ist, der das Vorzeichen des betrachteten Signals (.) liefert.

**Claims**

1. Device for demodulating a received signal (21; 41, 42) at a carrier frequency modulated on two axes in phase quadrature using a $\pi/4$-QPSK type digital modulation technique employing two modulation constellations with four alternately selected and relatively shifted phase states, of the type comprising:

- a voltage-controlled oscillator (28) supplying a local signal substantially at said carrier frequency,
- demodulator means using said local signal and supplying, after filtering (30, 31), the phase component P (22') and quadrature component Q (23') of the demodulated received signal,
- phase control means (32) producing a control signal (39) for controlling said oscillator (28) and including a phase estimator (33) producing a phase estimation signal E (35) satisfying substantially the condition:

$$E \left( \phi + \pi/4 \right) = -E \left( \phi \right) \qquad (1)$$

where:

$$\cos \phi = \frac{P}{\sqrt{P^2 + Q^2}} \quad \text{and} \quad \sin \phi = \frac{Q}{\sqrt{P^2 + Q^2}}$$

and involved in control of the oscillator (28), said phase estimation signal E (35) being derived from said phase component P (22') and quadrature component Q (23') of the demodulated received signal, characterised in that said phase control means (32) comprise means (34) for alternately inverting the polarity of said phase estimation signal E (35) at the rate at which said constellations alternate supplying said control signal (39) for controlling said oscillator (28) after filtering (29) in the loop.

2. Device according to claim 1 characterised in that said means (34) for alternately inverting the polarity of said phase estimation signal E (35) at the rate at which said constellations alternate are controlled by a polarity inversion signal I (48) whose sign is alternately positive and negative, each transition ($44_1$ through $44_4$, $45_1$ through $45_4$) of said inversion signal (43, 46; 48) being in substantially corresponding relationship to a transition ($47_1$ through $47_4$) between two consecutive symbols of said digital signal (41, 42).

3. Device according to claim 2 characterised in that said polarity inversion signal I (48) is obtained by halving (33) the frequency of a clock signal (Hs) at the symbol frequency of said digital signal.

4. Device according to any one of claims 1 through 3 characterised in that said means (34) for alternately inverting the polarity of the phase estimation signal E (35) comprise a multiplier receiving said polarity inversion signal I (48) and said phase estimation signal E (35).

5. Device according to any one of claims 1 through 4 characterised in that said phase estimator (33) supplies a phase estimation signal E (35) as follows:

$$E = (P).(Q).(P+Q).(P-Q)$$

6. Device according to any one of claims 1 through 4 characterised in that said phase estimator (33) supplies a phase estimation signal E (35) as follows:

$$E = sgn(P).sgn(Q).sgn(P+Q).sgn(P-Q)$$

where sgn(.) is an operator providing the sign of the signal (.) in question.

Fig. 1A

Fig. 1B

Fig. 1C

Fig. 2

P

41

42

Q

471    472    473    474

I 1er cas

+V                                    43

0

                          442          444
-V

441          443

I 2ème cas          451          453          46

+V

0

                          452
-V                                    454

49

<u>Fig. 3</u>